# EUROPEAN PATENT SPECIFICATION

(11) **EP 4 391 654 B1**
(45) Date of publication and mention of the grant of the patent: **29.01.2025**
(21) Application number: 22214675.5
(22) Date of filing: 19.12.2022
(51) Int. Cl.: H04W 48/18, H04W 64/00

(54) **METHOD FOR PROVIDING COMMUNICATION SERVICES TO A USER EQUIPMENT USING AN ACCESS NETWORK OF A MOBILE COMMUNICATION NETWORK, USER EQUIPMENT, SYSTEM, PROGRAM AND COMPUTER-READABLE MEDIUM**
VERFAHREN ZUR BEREITSTELLUNG VON KOMMUNIKATIONSDIENSTEN FÜR EIN BENUTZERGERÄT UNTER VERWENDUNG EINES ZUGANGSNETZES EINES MOBILEN KOMMUNIKATIONSNETZES, BENUTZERGERÄT, SYSTEM, PROGRAMM UND COMPUTERLESBARES MEDIUM
PROCÉDÉ POUR FOURNIR DES SERVICES DE COMMUNICATION À UN ÉQUIPEMENT D'UTILISATEUR UTILISANT UN RÉSEAU D'ACCÈS D'UN RÉSEAU DE COMMUNICATION MOBILE, ÉQUIPEMENT D'UTILISATEUR, SYSTÈME, PROGRAMME ET SUPPORT LISIBLE PAR ORDINATEUR

(43) Date of publication of application: 26.06.2024
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- EP-A1- 1 455 547
- WO-A1-2016/111684
- US-A1- 2003 003 922
- US-A1- 2017 064 538
- HUAWEI: "Coverage Holes Detection", 3GPP DRAFT; R3-092341_CCO_COVERAGE_HOLE_DETECT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Miyazaki; 20091010 - 20091015, 3 October 2009 (2009-10-03), XP050609934

## Description

### TECHNICAL FIELD

The invention relates to a method, user equipment, system, program and computer-readable medium for providing communication services to a user equipment in a mobile communication network.

### BACKGROUND

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network (and, hence, are also called terrestrial networks or TN-networks) are typically organized throughout a country (or a part of or a region within a country) in a repeating pattern of typically stationary (radio) cells (and associated base station entities) which typically belong to (or are operated or used by or associated or assigned to) a mobile network operator (MNO).

As part of known cellular telecommunications networks - or geographical areas or regions where cellular telecommunications networks are operated -, there are typically (geographical) parts or locations where (at least in average, i.e. using a plurality of user equipments) a better radio coverage is typically experienced by user equipments, and other (geographical) parts or locations where a worse radio coverage is experienced, i.e. a user equipment - while being located in or near a first geographical area - is (typically) able or has a high likelihood to be able to be connected to or to be served by at least one base station entity of the (radio) access network, and, analogously, the user equipment - while being located in or near a second geographical area -, is (typically) unable or has a low likelihood to be able to be connected to or to be served by any base station entity of the (radio) access network and/or by any base station entity of another access network.

Any of the current 3GPP-defined cellular networks or radio access technologies which are able to provide access of user equipments (i.e. radio coverage) to a telecommunications network, e.g. a public land mobile network (PLMN), are designed in a way that initially a public land mobile network is selected (PLMN selection procedure) to which an attempt to connect for services is performed; once the public land mobile network selection has been performed (i.e. by selecting one out of multiple available public land mobile networks in a certain location or while the user equipment being located at its current location), the process of selecting a suitable (radio) cell of the selected public land mobile network takes place. This is defined in 3GPP technical specifications for the different radio technologies in TS 25/36/38.304. After successful registration with the selected public land mobile network via the selected suitable cell, the process of cell reselection takes places, which ensures that the user equipment is always brought to the best cell from a radio environment/quality (quality-of-service) point of view. Throughout the mobility of a device (i.e. of a considered user equipment), it measures (its radio environment, and, hence, also that of) the neighboring (radio) cells and performs cell reselection when a better cell (or a radio cell providing an enhanced radio coverage) is found. If the coverage of the registered public land mobile network (RPLMN) ends (e.g. due to the mobile operator not having provided radio coverage in a particular geographical area), the considered user equipment is either out of service or performs a public land mobile network selection to find another public land mobile network which provides alternative coverage. This also happens in border areas between telecommunications networks (operating in different countries), i.e. typically at the country border.
Thus, the trigger to select a new public land mobile network is typically provided by the properties and/or characteristics of the radio environment of (especially measured by) the considered user equipment, e.g. triggered by decreasing public land mobile network cell quality. In case of a coverage loss inside a public land mobile network, especially at arbitrary locations, - and besides such measurement information (of radio frequency properties) of or about the radio environment in the immediate vicinity of the user equipment -, a user equipment typically has no pre-existing knowledge that the coverage ends (or will end soon) and also no pre-existing knowledge where the coverage of the registered public land mobile network can or is likely to be regained again.

US 2017/064538 A1 discloses a method for providing communication services to a user equipment as well as to a corresponding user equipment and system according to the preambles of respective claims 1, 12 and 13, wherein the home network of a UE includes coverage holes and rule sets are implemented for the coverage holes to provide a most likely opportunity for the UE to connect with its home network or a roaming network, wherein the rule sets and coverage hole locations are stored in the UE and are periodically updated by the home network; the UE determines its position (e.g. using GPS or cell ID) and accesses the rule set associated with its location. US 2003/003922 A1 discloses a UE which determines its location (e.g. using GPS), compares its location to information descriptive of a map stored in the UE, and derives at least one system selection parameter (e.g.. band of frequencies or frequency channel on which the UE may obtain access to a desired system) from the UE's location relative to the map.

### SUMMARY

An object of the present invention is to provide a technically simple, effective and cost-effective solution for providing communication services to a user equipment using an access network of or associated with a mobile communication network, wherein by means of coverage information that is, at least in part, able to be transmitted to and received by the user equipment, the first geographical area and/or the second geographical area is able to be indicated or referenced in a manner such that the coverage information indicates - or that it is derivable from the coverage information - to use, at different locations of the first and/or second geographical area, different location-dependent sets of connection parameters in order for the user equipment to be able to get, or to be provided with, radio coverage while being located at such different locations. A further object of the present invention is to provide a corresponding user equipment, system or mobile communication network, a coverage database or coverage information entity or functionality and a corresponding program and computer-readable medium.

The invention is defined by the features of the claims.

The object of the present invention is achieved by a method for providing communication services to a user equipment using an access network of or associated with a mobile communication network, wherein the user equipment, while being located in or near a first geographical area, is able or has a high likelihood to be able to be connected to or to be served by at least one base station entity of the access network, and wherein the user equipment, while being located in or near a second geographical area, is unable or has a low likelihood to be able to be connected to or to be served by any base station entity of the access network and/or by any base station entity of another access network,
wherein by means of coverage information that is, at least in part, able to be transmitted to and received by the user equipment, the first geographical area and/or the second geographical area is able to be indicated or referenced in a manner such that the coverage information indicates - or that it is derivable from the coverage information - to use, at different locations of the first and/or second geographical area, different location-dependent sets of connection parameters in order for the user equipment to be able to get, or to be provided with, radio coverage while being located at such different locations, wherein the user equipment comprises a location detection means or capability for determining at least an indication or an approximation of the current location of the user equipment,
wherein, in order for the user equipment to be provided with communication services, the method comprises the following steps:
   -- in a first step, the user equipment receives, at a first point in time or during a first time interval, a piece of coverage information, the piece of coverage information being or corresponding to at least a part of the coverage information,
   -- in a second step, the user equipment determines, at a second point in time and using its location detection means or capability, an indication or an approximation of its current location, and the user equipment further determines, based on both the indication or the approximation of its current location and based on the piece of coverage information or its content, the location-dependent set of connection parameters, corresponding to the determined current location and to be used in order to get or to be provided with radio coverage.

Especially by means of providing the user equipment with a piece of coverage information (being at least a part of the coverage information), it is advantageously possible according to the present invention to provide the user equipment not only with information whether (or not) - at its current location - the user equipment has a rather high likelihood to be able to be connected to or to be served by at least one base station entity of the access network, but also with information by means of which set of connection parameters such a radio coverage is the likeliest to be get.
Hence, according to the present invention, a considered user equipment is able to be provided with a further source of information such as to being capable of getting access to the radio access network (or to be provided with radio coverage) more efficiently - especially more quickly and/or in a more energy-efficient manner. This further source of information regarding the possibility of being served by or getting coverage from the radio access network of the telecommunications network is able to be provided, to the user equipment, to a great extent independently from where and independently from when this further source of information is actually used.
It is especially advantageous according to the present invention, that the piece of coverage information provides an information, to the user equipment, regarding the possibility or likelihood (at certain locations) of radio coverage provided by the access network (i.e. at least one base station entity thereof) not only of the mobile communication network (that the user equipment is connected to) but also of other mobile communication networks (that provide coverage at the considered location or in its vicinity).
Hence, it is proposed to allow the user equipment to obtain - by means of the piece of coverage information - geographical knowledge about the coverage area (and optionally the radio access technology and furthermore optionally the coverage per frequency band in case of multiple bands provided in a certain geographical area) of the current registered network (RPLMN) and possible alternative PLMNs by making coverage information available to the user equipment (by means of the piece of coverage information), especially by means of using a coverage database, which provides either large scale information about the coverage of a public land mobile network (e.g. entire PLMN coverage) or selectively only in parts of the network, e.g. which is relevant for the user equipment at the considered point in time (e.g. depending in the movement of the user equipment in different area granularity (e.g. the piece of coverage information corresponds to a smaller area for a stationary or slow moving user equipment, and a larger area in case the user equipment is travelling fast on a car or a train).

As already said, conventionally known mobile communication networks (cellular 3GPP systems) do not apply such an approach; to the contrary, in such known networks, the mobility and the user equipment knowledge about radio coverage is always based on performing radiofrequency measurement. With the wide availability of global navigation satellite system (GNSS) receivers even at the cheapest user equipments and the less restrictive data amount being transferred via cellular networks, by means of transmitting the piece of coverage information to a user equipment, it is advantageously possible, according to the present invention, to improve especially the user experience while still keeping the mobility control under a control based on network parameters and information provided by the network.
Furthermore in conventionally known mobile communication networks and for conventionally known user equipments having a functionality according to the applicable communication standards (or 3GPP standards), in case of coverage losses inside a public land mobile network - and besides measurements regarding the radio environment of the user equipment in its vicinity - a user equipment typically has no pre-existing knowledge that the coverage ends (or will end soon) and also no pre-existing knowledge where the coverage of the registered public land mobile network can or is likely to be regained again. This situation of not knowing where a coverage might be regained and the usage of radio measurements has mainly historical reasons as - perhaps 10 years ago - most of the devices, i.e. user equipments, did not have the (or an efficient) possibility to determine at least an approximation of their current location, i.e. especially such user equipments were not equipped with GNSS receivers by means of which a user equipment can obtain knowledge regarding the location of the device; thus, out of sheer necessity, the respective or applicable communication standards, even nowadays, prescribe that a user equipment is forced to perform regular power-consuming radiofrequency measurements, if located outside of the coverage area of a particular public land mobile network (or home/equivalent network or home/equivalent public land mobile network) in order to regain access to the public land mobile network once the cellular network becomes available again (especially by means of periodic network selection attempts (e.g. "background public land mobile network search"), i.e. attempts to look for a higher priority network, typically a public land mobile network - even though this typically requires a comparatively high amount of energy, hence involves a comparatively high battery drain, especially for battery-powered user equipments). Any attempt to minimize the power consumption of the user equipment will lead to extra delays to regain the coverage of the public land mobile network again (e.g. if the measurements are only done relatively sporadic with increasing time in-between attempts, which is the current state of the art implementation of user equipments).

According to the present invention, it is assumed that regarding the geographical extension of a mobile communication network (having or being associated with a radio access network), there are, or will be, areas having a better radio coverage and other areas having a worse radio coverage. In the context of the present invention, the areas having a better radio coverage are also called first geographical areas, and the areas having worse radio coverage are also called second geographical areas. Otherwise said, a user equipment, while being located in or near a first geographical area, is able or has - due to the better radio coverage in the first geographical areas - a high(er) likelihood to be able to be connected to or to be served by at least one base station entity of the access network, and - symmetrically - a user equipment, while being located in or near a second geographical area, is unable or has - due to the worse radio coverage in the second geographical areas - a low(er) likelihood to be able to be connected to or to be served by any base station entity of the access network and/or by any base station entity of another access network. Of course, the first and/or second geographical areas do not necessarily correspond, respectively, to one continuous (or contiguous or joining) area or surface; each is simply meant to designate a multitude (or a set) of points or positions or locations (or areas) where a user equipment would typically have either better or worse connectivity to or coverage by the mobile communication network. According to the present invention, In order to provide communication services to a user equipment using the mobile communication network and its access network, use is made of coverage information that is, at least in part, able to be transmitted to and received by the user equipment. What is actually transmitted to the user equipment is hereinafter also called a piece of coverage information, indicating, that - at least in most cases - this does typically not correspond to the 'whole' coverage information (that would cover the whole network or its whole geographical extent).
The coverage information especially comprises at least two kinds of information, and this especially regarding a multitude of different locations, respectively: First, an information regarding what level of coverage a user equipment could expect to 'see' or is likely to experience, and second, an information regarding which set of connection parameters are to be use in order to get or to be provided with the corresponding radio coverage. Hence, from the coverage information, the first geographical area and/or the second geographical area is (or: the first geographical areas and/or the second geographical areas are) able to be indicated or referenced in a manner such that the coverage information indicates - or that it is derivable from the coverage information - to use, at different locations of the first and/or second geographical area, different location-dependent sets of connection parameters in order for the user equipment to be able to get, or to be provided with, radio coverage while being located at such different locations. Furthermore according to the present invention, in order for the user equipment to be able to effectively use the coverage information (especially while being located at a location without (much) radio coverage), the user equipment needs - i.e. the user equipment comprises - a location detection means or capability for determining at least an indication or an approximation of the current location of the user equipment.
Hence, according to the present invention, - in a first step of the inventive method - the user equipment receives, at a first point in time or during a first time interval, a piece of coverage information (wherein the piece of coverage information is (or corresponds to) at least a part of the coverage information). In a second step of the inventive method, the user equipment determines - at a (subsequent) second point in time (typically being located at a different location compared to the first point in time or first time interval) and using its location detection means or capability - an indication or an approximation of its current location, and the user equipment further determines - based on both the indication or the approximation of its current location and based on the piece of coverage information or its content - the location-dependent set of connection parameters, corresponding to the determined current location and to be used in order to get or to be provided with radio coverage.
Hence, according to the present invention, the user equipment is able to be provided with additional information (or assistance information, i.e. the piece of coverage information that is at least a part of the coverage information) about the coverage area(s) of the public land mobile network (or even of a plurality of public land mobile networks) available to the user equipment (at its current location or in a greater or smaller vicinity thereof), and, thus, allow the usage of this additional information to obtain a better customer experience. This is possible according to the present invention due to the fact that the overwhelming majority of modern (or currently used) user equipments are equipped with global navigation satellite system (GNSS) capabilities (or, if not, comprise, at least, a location detection means or capability (different from a global navigation satellite system) for determining at least an indication or an approximation of its current location; such other procedures to obtain or to determine the location or an approximation thereof of the user equipment especially comprise network based positioning (Enhanced-Cell ID, AoA, OTDOA, etc.) or "RF fingerprinting technologies").
Furthermore, the transmission of such additional information (or assistance information or the piece of coverage information) does not put an excessive strain on currently used mobile communication networks: the connectivity of radio access technologies such as LTE and 5G allows to send such additional assistance information (or the piece of coverage information) to mobile devices efficiently such that it is able to be utilized during the cell reselection process (either instead or in addition to the classical approach based on radiofrequency measurements).

According to the present invention, it is advantageously possible and preferred that the location-dependent set of connection parameters correspond to or comprise at least one out of the following:
-- an information regarding or indicating the frequency band to be used and/or regarding or indicating the frequency to be used, especially the frequency to be used per frequency band, especially for the mobile communication network being the current registered public land mobile network of the user equipment,
-- an information regarding or indicating the radio access technology to be used, especially for the current registered public land mobile network,
-- an information regarding another mobile communication network being an alternative public land mobile network.

It is thereby advantageously possible that the piece of coverage information indicates the connection parameters in a flexible manner, i.e. the coverage information comprises (or indicates or that it is derivable from the piece of coverage information) - regarding (especially, but not exclusively, as the piece of coverage information typically comprises the respective information contents regarding a plurality of locations or areas) the current location of the user equipment - a set of connection parameters (or a plurality of sets of connection parameters) such that the user equipment, by using these connection parameters, is able to get or be provided with radio coverage (either by the registered public land mobile network or by an alternative public land mobile network) in a flexible manner, i.e. only a frequency band to be used could be provided, and/or a frequency within a frequency band, and/or a radio access technology (with the respective indications regarding, e.g., frequencies), and/or the indication of another (alternative) mobile communication network.

According to the present invention, it is advantageously furthermore possible and preferred that the mobile communication network comprises a coverage database or a coverage information entity or functionality with a coverage database or a coverage database is accessible via the mobile communication network, wherein the coverage database comprises the coverage information or the coverage information is retrievable using the coverage database,
wherein the coverage database and/or the user equipment accessing the coverage database is especially realized:
-- using an open radio access network, Open-RAN, architecture, especially directly allowing the user equipment to access the coverage database, especially through a user plane bearer and/or an enhanced version of the control plane to a radio intelligent controller, RIC, providing a runtime environment for xapps, and/or
-- using the service base architecture, SBA, framework defined in 3GPP, especially by means of the coverage database being realized as a network function for coverage service provision, being able to be accessed by the user equipment, wherein especially a defined database provides the piece of coverage information to the user equipment through a coverage data network function, CDNF.

It is thereby advantageously possible to easily and efficiently implement the present invention, especially by means of the coverage database being able to provide (and the user equipment being able to receive) the coverage information in a comparatively easy and efficient manner; especially the coverage information database or the coverage information entity or functionality corresponds to or exposes an interface of a network function or service within the mobile communication network (especially the core network thereof), wherein the coverage information entity or functionality exposes its functionality or service - especially to provide the piece of coverage information upon a request received, e.g., from the user equipment, through a service based interface (SBI), which especially employs a well-defined REST interface, e.g. using HTTP/2.

According to the present invention, it is furthermore advantageously possible and preferred that the coverage information corresponds to a rather large geographical area, especially covering a mobile communication network or even a plurality of mobile communication networks on a supranational, national or regional level,
wherein especially the piece of coverage information, transmitted to and received by the user equipment, corresponds to at least a part of the geographical coverage of the coverage information, especially regarding the geographical area that is currently, or typically, relevant for the user equipment, especially dependent on the present and/or past movement of the user equipment,
wherein especially the definition of the piece of coverage information, and especially its geographical extent, is performed taking into account the likely subsequent movement of the user equipment during a predetermined future time interval of, e.g., a couple of minutes or an hour or a couple of hours,
wherein especially the piece of coverage information, and especially its geographical extent, is defined either by the user equipment and/or by the mobile communication network,
wherein especially the piece of coverage information is requested, by the user equipment, to be transmitted to the user equipment,
wherein especially the user equipment determines, at the second point in time, the location-dependent set of connection parameters - especially repeatedly, at a plurality of points in time, respective location-dependent sets of connection parameters for the respective locations - in a manner independent from the mobile communication network.

It is thereby advantageously possible according to the present invention to realize and implement the inventive method in a comparatively simple and efficient manner.

Furthermore, it is advantageously possible and preferred according to the present invention that the piece of coverage information is transmitted, to the user equipment, by the mobile communication network, especially the respective radio cell currently serving the user equipment, using
-- control plane signaling, especially radio resource control signaling in a 3GPP defined radio access technology, especially LTE, NR, or 6G, especially either at establishment of the initial connection or at another point in time, and/or
-- the system information broadcast,
wherein especially the piece of coverage information comprises local definitions of parts of the first geographical area and/or of parts of the second geographical area, especially using polygons or polygon information - of especially one polygon or a plurality of polygons - to describe the respective parts of the first and/or second geographical area, and preferably the respective or corresponding expected coverage level, especially per frequency or frequency band and/or per radio access technology and/or per public land mobile network and/or per radio quality level, especially in steps of 5 dB or in steps of 10 dB or in steps of 20 dB or in steps of more than 20 dB.

Thereby, it is advantageously possible to flexibly transmit the piece of coverage information to the user equipment and also to flexibly provide the piece of coverage information with a different content (especially dependent to which location (or to which geographical area) the piece of coverage information refers).

According to the present invention, it is furthermore advantageously possible and preferred that the coverage information and/or the piece of coverage information comprises location-dependent information regarding the radio quality level to be expected and/or regarding expected coverage holes or white spots,
wherein especially the coverage information and/or the piece of coverage information is defined or obtained using artificial intelligence or machine learning algorithms, especially as part of the coverage data network function, CDNF in order to optimized the value or the relevance of the database content,
wherein especially the coverage information, and as a consequence also the piece of coverage information, is defined and/or generated, at least partly, using measurements performed previously or coverage information reported previously by a plurality of user equipments, especially using minimization of drive test, MDT, techniques.

It is thereby advantageously possible according to the present invention to realize and implement the inventive method in a comparatively simple and efficient manner.

Furthermore, it is advantageously possible and preferred according to the present invention that the location-dependent information - contained in the coverage information and/or the piece of coverage information - regarding the radio quality level to be expected corresponds to either a standardized or normalized situation of a typically user equipment, or corresponds to one or a plurality of different typical or standardized usage scenarios of the user equipment, especially corresponding to an indoor usage of the user equipment, or to an outdoor usage, or to a usage abord a vehicle or a means of transport,
wherein especially the location-dependent information regarding the radio quality level to be expected differs in case of different usage scenarios considered,
wherein especially, based on a comparison of the radio quality level to be expected and an actual radio quality level experienced or measured by the user equipment, the user equipment assesses the current actual radio quality level, especially resulting in a reduction of public land mobile network selection and/or cell selection procedures.

It is thereby advantageously possible according to the present invention to realize and implement the inventive method in a comparatively simple and efficient manner.

According to the present invention, it is furthermore advantageously possible and preferred that the first point in time or the first time interval, on the one hand, and the second point in time, on the other hand, occur either rather simultaneously or are separated in time by at least several seconds, several minutes, several hours, several days or even several weeks.

Thereby, it is advantageously possible to use the piece of coverage information transmitted to the user equipment - and typically stored in the user equipment or in a memory device or memory part associated to or accessible by the user equipment or mobile device - in view to provide a background information, which is especially a regularly updated background information, for the user equipment to use in order to decide - instead or in addition to the classical approach based on radiofrequency measurements - which connection parameters to use in order, e.g., to receive broadcast channel information (especially system information block information elements) or to contact the mobile communication network or to be provided with radio coverage. In case the piece of coverage information is rather used as a background information (e.g. used on a rather continuously, or daily, basis) the time difference between the first and second point in time is likely to be, in average, rather longer, e.g. of the order of hours, days or weeks. However alternatively, or cumulatively, the piece of coverage information, transmitted to the user equipment, could also be used, or applied, - by both the user equipment and the mobile communication network - in a more ad-hoc manner: E.g. the user equipment could receive the piece of coverage information (or an additional piece of coverage information - in addition to its background coverage information) to be used more or less immediately (of the order of seconds or minutes after the transmission) in case that the user equipment is moving or travelling (especially comparatively fast) in a direction of a rather unusual geographical area (for or regarding the considered user equipment) and/or in a direction of a geographical area from which it is known that it comprises (e.g. especially along transportation axes, like motorways or train lines, allowing for comparatively high velocities) areas of rather bad coverage or white spots.

Furthermore, it is advantageously possible and preferred according to the present invention that the location detection means or capability of the user equipment is able to determine at least an indication or an approximation of the current location of the user equipment by means of at least one out of the following:
-- global navigation satellite system, GNSS, capabilities of the location detection means or capability, especially assisted global navigation satellite system, A-GNSS, capabilities,
-- location detection capabilities based on using observed time difference of arrival, OTDOA, and/or enhanced cell ID, ECID,
-- location detection capabilities based on radio frequency fingerprinting,
-- location detection capabilities based on measurements of inertial sensors of the user equipment, especially together with sporadic location information transmitted to the user equipment, especially by the mobile communication network.

It is thereby advantageously possible according to the present invention to realize and implement the inventive method in a comparatively simple and efficient manner.

Furthermore, the present invention relates to a user equipment for providing communication services to a user equipment using an access network of or associated with a mobile communication network, wherein the user equipment, while being located in or near a first geographical area, is able or has a high likelihood to be able to be connected to or to be served by at least one base station entity of the access network, and wherein the user equipment, while being located in or near a second geographical area, is unable or has a low likelihood to be able to be connected to or to be served by any base station entity of the access network and/or by any base station entity of another access network,
wherein by means of coverage information that is, at least in part, able to be transmitted to and received by the user equipment, the first geographical area and/or the second geographical area is able to be indicated or referenced in a manner such that the coverage information indicates - or that it is derivable from the coverage information - to use, at different location of the first and/or second geographical area, different location-dependent sets of connection parameters in order for the user equipment to be able to get, or to be provided with, radio coverage while being located at such different locations, wherein the user equipment comprises a location detection means or capability for determining at least an indication or an approximation of the current location of the user equipment,
wherein, in order for the user equipment to be provided with communication services, the method comprises the following steps:
   -- in a first step, the user equipment receives, at a first point in time or during a first time interval, a piece of coverage information, the piece of coverage information being or corresponding to at least a part of the coverage information,
   -- in a second step, the user equipment determines, at a second point in time and using its location detection means or capability, an indication or an approximation of its current location, and the user equipment further determines, based on both the indication or the approximation of its current location and based on the piece of coverage information or its content, the location-dependent set of connection parameters, corresponding to the determined current location and to be used in order to get or to be provided with radio coverage.

It is thereby advantageously possible to realize the present invention using a corresponding user equipment.

Furthermore, the present invention relates to a system or mobile communication network for providing communication services to a user equipment using an access network of or associated with the mobile communication network, wherein the user equipment, while being located in or near a first geographical area, is able or has a high likelihood to be able to be connected to or to be served by at least one base station entity of the access network, and wherein the user equipment, while being located in or near a second geographical area, is unable or has a low likelihood to be able to be connected to or to be served by any base station entity of the access network and/or by any base station entity of another access network,
wherein by means of coverage information that the mobile communication network is able to transmit, at least in part, to the user equipment, the first geographical area and/or the second geographical area is able to be indicated or referenced in a manner such that the coverage information indicates - or that it is derivable from the coverage information - to use, at different locations of the first and/or second geographical area, different location-dependent sets of connection parameters in order for radio coverage being provided to the user equipment while being located at such locations,
wherein the user equipment has the capability for determining at least an indication or an approximation of the current location of the user equipment,
wherein, in order for the user equipment to be provided with communication services, the system of mobile communication network is configured such that:
   -- at a first point in time or during a first time interval, the mobile communication network transmits, and the user equipment receives, a piece of coverage information, the piece of coverage information being or corresponding to at least a part of the coverage information,
   -- at a second point in time, the system or mobile communication network receives, from the user equipment, a connection request and provides radio coverage, wherein the connection request corresponds to or uses the location-dependent set of connection parameters that the user equipment is able to determine based on the determination of its current location and based on the piece of coverage information or its content.

Furthermore, a non-claimed embodiment relates to a coverage database or coverage information entity or functionality, especially coverage data network function, as part of or assigned to or able to be accessed by a system or a mobile communication network according to the present invention or able to be accessed by a user equipment according to the present invention.
Especially, the coverage information entity or functionality, or the coverage database, is able to be realized as a cloudified network function similar to other network functions in the 3GPP service-based architecture (SBA).

Additionally, the present invention relates to a program comprising a computer readable program code which, when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

Still additionally, the present invention relates to a computer-readable medium comprising instructions which when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

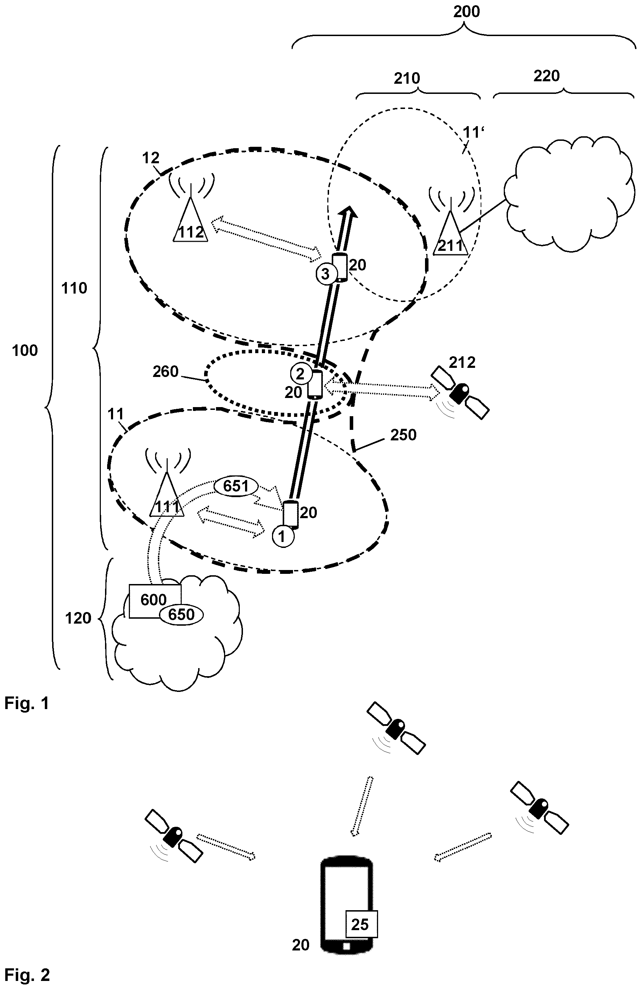

Figure 1 schematically illustrates the situation of a user equipment in a mobile communication network, wherein the user equipment, while being located in or near a first geographical area, is able or has a high likelihood to be able to be connected to or to be served by at least one base station entity of the access network, and wherein the user equipment, while being located in or near a second geographical area, is unable or has a low likelihood to be able to be connected to or to be served by any base station entity of the access network and/or by any base station entity of another access network.
Figure 2 schematically illustrates the user equipment being able to determine its location - using a location detection means or capability of the user equipment - based on using a global navigation satellite system.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a user equipment 20 is schematically shown in a mobile communication network 100 exemplarily travelling or moving along a path indicated by means of a drawn-through (bold) arrow and positional indications being designated by means of reference signs 1, 2 and 3, these positional indications being intended to schematically show different positions (or locations) of the user equipment 20 - a first position or location 1 of the user equipment 20, a second position or location 2 of the user equipment 20 and a third position or location 3 of the user equipment 20 - along its moving or travelling path, i.e. the user equipment 20 being located at these different positions or locations 1, 2 and 3 at different points in time, i.e. a first point in time if the user equipment 20 is positioned at the first position or location 1, a second point in time if the user equipment 20 is positioned at the second position or location 2, and a third point in time if the user equipment 20 is positioned at the third position or location 3. The moving or travelling path of the user equipment 20 is schematically represented, in Figure 1, by means of a straight line (or arrow), however this representation has been chosen only for the sake of simplicity only; it is, of course, possible, and will in practice typically be the case, that the user equipment 20 moves or may move along a curved or otherwise non-straight path. In the context of the present invention, the user equipment 20 represented in Figure 1 might also be called a considered user equipment or a specific user equipment; of course, further user equipments are typically present and connected to (and/or served by) the mobile communication network 100, however, again for the sake of simplicity, such further user equipments are not represented in Figure 1.

Figure 1 illustrates the situation of the user equipment 20 in a mobile communication network 100, typically being a terrestrial network, and comprising an access network 110 and a core network 120. The mobile communication network 100 is preferably a cellular telecommunications network comprising typically a plurality of network cells (or radio cells). The access network 110 is part of or associated with the mobile communication network 100. The user equipment 20 is able to be connected to (or served by) a base station entity 111 being part of the access network 110. Typically, the access network 110 also comprises, besides the (first) base station entity 111, further base station entities, only one of which - a second base station entity 112 - is schematically shown in Figure 1. Each of the base station entities 111, 112 of the mobile communication network 100 (or of the access network 110 thereof) serves a radio coverage area or radio cell, the (first) base station entity 111 serving a first radio cell 11, and the second base station entity 112 serving a second radio cell 12. In practice, such radio coverage areas or radio cells 11, 12 provided or generated by the base station entities 111, 112 of the access network 110 are typically geographically fixed (i.e. continuously covering the same geographical areas more or less all the time).

In the exemplary situation shown in Figure 1, the user equipment 20 is shown to be located (for some of the above mentioned positions or locations of the user equipment 20, namely for the first and third positions or locations 1, 3 of the user equipment 20) in or near a first geographical area 250, where the user equipment 20 is able or has a high likelihood to be able to be connected to or to be served by at least one base station entity 111, 112 of the access network 110. Furthermore, Figure 1 shows the user equipment 20 being located in or near a second geographical area 260, where it is unable or has a low likelihood to be able to be connected to or to be served by any base station entity of the access network 110 and/or by any base station entity of another access network; the only radio coverage, the user equipment 20 might get in or near the second geographical area 260 might be from a (non-terrestrial) base station entity 212 which is schematically shown, in Figure 1, as part of a further mobile communication network 200 having a further core network 220 and a further access network 210, the further access network 210 comprising, besides the (non-terrestrial) base station entity 212, a further base station entity 211 that serves a further radio cell 11'.

According to the present invention, providing communication services are provided to the user equipment 20 using the access network 110 of or associated with the mobile communication network 100. In a typical mobile communication network 100 (i.e. in the geographical area covered by the mobile communication network 100), a user equipment 20 normally experiences a better radio coverage in some geographical areas than in others. This is exemplarily illustrated, in Figure 1, by means of a first geographical area 250, and a second geographical area 260. In case the user equipment 20 (i.e. a typical user equipment 20) is located in or near the first geographical area 250, it is able or has a high likelihood to be able to be connected to or to be served by at least one base station entity of the access network 110, and in case the user equipment 20 is located in or near the second geographical area 260, is unable or has a low likelihood to be able to be connected to or to be served by any base station entity of the access network 110 and/or by any base station entity of another access network (i.e. of any other access network). For the sake of simplicity, the first geographical area 250 roughly corresponds to the combination of first and second radio cells 11, 12, served, respectively, by the first base station entity 111, and the second base station entity 112 of the access network 110. The second geographical area 260 is indicated, in Figure 1, as being located roughly in-between the first and second radio cells 11, 12.

According to the present invention, coverage information 650 is able to be transmitted, at least partly, to the user equipment 20, the coverage information 650 indicating, to the user equipment 20, which connection parameters (or which set of connection parameters) to use preferably at which location (in order to be connected to the mobile communication network 100, i.e. to one of the base station entities 111, 112 thereof. In case that - regarding a location or geographic area - no suitable connection parameters or no suitable set of connection parameters are indicated, as part of the coverage information 650, such location or geographic area rather belongs to the second geographical area 260. In contrary, in case that - regarding another location or geographic area - one or even a plurality of suitable connection parameters or a plurality of suitable sets of connection parameters are indicated, as part of the coverage information, it can be inferred that such other location or geographic area rather belongs to the first geographical area 250. Hence - at least in principle -, the first geographical area 250 and/or the second geographical area 260 is able to be indicated or referenced by the coverage information 650, and especially the coverage information 650 indicates - or it is derivable from the coverage information 650 - to use, at different locations of the considered geographical area (and especially of the first and/or the second geographical area 250, 260), different location-dependent sets of connection parameters in order for the user equipment 20 to be able to get, or to be provided with, radio coverage while being located at such different locations.
Furthermore according to the present invention, the user equipment 20 comprises a location detection means or capability 25 for determining at least an indication or an approximation of its current location, and the inventive method comprises the steps of the user equipment 20 receiving a piece of coverage information 651; the user equipment 20 determining both its current location (or, an indication or approximation thereof), and - based on its current location and the piece of coverage information 651 or its content - the location-dependent set of connection parameters (that corresponds to the determined current location and to be used in order to get or to be provided with radio coverage). The piece of coverage information 651 is or corresponds typically to only a part (especially a geographical subset) of the coverage information 650 (that typically covers the whole coverage area of the mobile communication network 100). Furthermore, the piece of coverage information 651 is transmitted to the user equipment 20 (and received by the user equipment 20) at a first point in time or during a first time interval, and the determination of the current location (or indication or approximation thereof, using the location detection means or capability 25) of the user equipment 20 as well as the determination of the location-dependent set of connection parameters to apply or use at this current location of the user equipment 20 is typically done at a (different) second point in time - and normally, the at the second point in time, the user equipment 20 will be located at a different position or location than at the first point in time or during the first time interval.

This is schematically illustrated in Figure 1 which shows the user equipment 20 to be located at its first position or location 1, the first position or location 1 being part of the first radio cell 11, served by the first base station entity 111 (indicated by means of a (dotted) double arrow between the user equipment 20 at its first position or location 1 and the first base station entity 111. It is furthermore shown, in Figure 1, that the piece of coverage information 651 is transmitted to the user equipment 20, by the first base station entity 111; this being indicated by means of a (dotted) curved arrow towards the user equipment 20 at its first position or location 1. The first base station entity 111 might have stored the piece of coverage information 651 to be sent to the user equipment 20, or - as schematically hinted at by the representation of Figure 1 - the first base station entity 111 retrieves the piece of coverage information 651 from a coverage database 600 or a coverage information entity or functionality with the coverage database 600. The coverage database 600 is especially accessible via the mobile communication network 100, and it comprises the coverage information 650 or the coverage information 650 is retrievable using the coverage database 600. In Figure 1, the coverage database 600 or the coverage information entity or functionality is schematically shown as part of the core network 120 of the mobile communication network 100 but it could also be located somewhere else (but accessible from or by the mobile communication network 100 and its components, elements and/or network nodes). Hence, the user equipment 20 being located at its first position or location 1 schematically represents the transmission of the piece of coverage information 651 from the mobile communication network 100 to the user equipment 20, thus the first step of the method according to the present invention, and this occurs at the first point in time or during the first time interval.
The definition of the piece of coverage information 651 - i.e. which part of the coverage information 650 is actually transmitted to the user equipment 20 - might, e.g., depend on which part a part of the geographical coverage of the coverage information 650 is currently, or typically, relevant for the user equipment 20, especially dependent on the present and/or past movement of the user equipment 20. According to a further alternative embodiment, when defining the piece of coverage information 651 to be transmitted to the user equipment 20, the likely subsequent movement of the user equipment 20 during a predetermined future time interval of, e.g., a couple of minutes or an hour or a couple of hours, is taken into account. Especially the piece of coverage information 651 (and especially its geographical extent) is defined by the user equipment 20 or by the mobile communication network 100 or by both.

At subsequent points in time the user equipment 20 is illustrated, in Figure 1, to be located at its second position or location 2 or at its third position or location 3. Especially the user equipment 20 determines the location-dependent set of connection parameters in a manner independent from the mobile communication network 100 and/or especially repeatedly, at a plurality of points in time (subsequent to the first point in time). In case that the second step of the inventive method is performed while the user equipment 20 is located at its second position or location 2 (being part of the second geographical area 260 having rather bad radio coverage from the mobile communication network 100), the user equipment 20 determines its current location, and furthermore determines, based on both its current location and on the piece of coverage information 651 or its content (stored within the user equipment 20), that there is either no (terrestrial) mobile communication network available at all (i.e. no suitable set of connection parameters is indicated by the piece of coverage information 651) or that the only possibility consists in using a non-terrestrial base station entity 212 (schematically indicated in Figure 1), i.e. a set of connection parameters corresponding to such non-terrestrial base station entity 212 might be indicated by the piece of coverage information 651.
In case that the second step of the inventive method is performed while the user equipment 20 is located at its third position or location 3 (being again part of the first geographical area 250), the user equipment 20 determines its current location, and furthermore determines, based on both its current location and on the piece of coverage information 651 or its content, that coverage is able to be get from the second base station entity 112 of the mobile communication network 100 by means of applying the set of connection parameters corresponding to the second base station entity 112 (service of the user equipment 20 by the second base station entity 112 is again schematically represented, in Figure 1, by means of a (dotted) double arrow between the user equipment 20 at its third position or location 3 and the second base station entity 112.

According to the present invention, the piece of coverage information 651 is especially transmitted by the respective radio cell (or base station entity 111, 112) currently serving the user equipment 20, and especially using the system information broadcast and/or control plane signaling, especially radio resource control signaling in a 3GPP defined radio access technology, especially LTE, NR, or 6G, especially either at establishment of the initial connection or at another point in time. Especially the piece of coverage information 651 might comprise local definitions of parts of the first geographical area 250 and/or of parts of the second geographical area 260, especially using polygons or polygon information - of especially one polygon or a plurality of polygons - to describe the respective parts of the first and/or second geographical area 250, 260, and preferably the respective or corresponding expected coverage level, especially per frequency or frequency band and/or per radio access technology and/or per public land mobile network and/or per radio quality level, especially in steps of 5 dB or in steps of 10 dB or in steps of 20 dB or in steps of more than 20 dB.

In Figure 2, the user equipment 20 is schematically shown with its location detection means or capability 25 - especially a global navigation satellite system receiver - for determining its own (current) location or position: The user equipment 20 determines its location or position based on using a global navigation satellite system; three satellites thereof are schematically shown in Figure 2.

According to an embodiment according to the present invention, it is proposed to allow the user equipment 20 to access a particular coverage database, i.e. the coverage database 600 with the coverage information 650, and download the related coverage information (i.e. the piece of coverage information 651) to the user equipment 20 for further usage, the coverage database 600 does not only contain information on the coverage area provided by a particular PLMN (i.e. the mobile communication network 100) but also optionally details on the frequencies, the radio technologies or in detail the radio quality levels to be expected in that coverage are. Especially, the (coverage) database 600 can be realized in an O-RAN (OpenRAN) architecture by allowing direct access of the user equipment 20 through the user plane bearer or an enhanced version of the control plane to the radio intelligent controller (RIC) which aims to provide a runtime environment for so-called xApps; these xApps could especially be third party apps running on an open RIC environment and provide specific services to different entities. Alternatively, the (coverage) database 600 can be realized by extending the service based architecture (SBA) framework defined in 3GPP for 5G toward the user equipment 20; by doing so the network function (NF) for coverage service provision (i.e. the coverage information entity or functionality) can be accessed by the user equipment 20 (e.g. by a user equipment request) and a defined database (coverage database 600) provides the related coverage information (i.e. the piece of coverage information 651) to the user equipment 20 through a coverage data network function (CDNF), i.e. the coverage information entity or functionality. The concept can also be integrated in the artificial intelligence/machine learning framework (Al / ML) framework which is currently under definition inside 3GPP as well as in O-RAN. A reporting of (measured) coverage information - e.g. based on the well-known minimization of drive test (MDT) feature can leverage crowd data to train the Al/ML algorithms inside the CDNF to get more realistic coverage information over the time based on such algorithms. In an alternative or further embodiment, the AI/ML algorithm can also predict the movement of the particular user equipment 20 and take appropriate measurements towards the UE itself (i.e. inform about upcoming coverage outage) or inside the mobile communication network 100 to, e.g., allow the change of the connection proactively to alterative PLMNs or other networks (i.e. move the user equipment 20 proactively to WLAN in case of going indoors or using even satellite based connections).

According to another embodiment according to the present invention, it is proposed to use control plane signaling, i.e. radio resource control (RRC) signaling in a 3GPP defined radio technology such as LTE, NR or 6G. Either at the establishment of the initial connection or at any other connection the radio access network 110 provides the user equipment 20 with specific coverage information (i.e. the piece of coverage information 651 which is relevant for the user equipment 20 in the particular geographical area. This information contains coverage information (in particular in form of a polygon described by geographical reference points (e.g., GNSS coordinates) about the radio coverage to be expected in that area or in the corresponding area. The piece of coverage information 651 can, e.g. be per frequency or per radio access technology or per public land mobile network. Furthermore, this information does not need to provide a contiguous large polygon of the coverage area on a per cell level; it could also contain multiple polygons describing a scattered coverage area, e.g. discontinuous (or separated) polygons referring to coverage being (likely to be) accessible or referring to different coverage levels, i.e. such coverage information might also be differentiated with regard to the radio quality to be expected (i.e. in terms of specific radiofrequency parameters such as, e.g., the received RSSI/RSRP/RSCP), e.g. per quality level (e.g. in steps of 10 or 20 dB) different coverage maps/polygons can be provided to the user equipment 20. Especially, the coverage information (or the piece of coverage information 651) can be provided to the user equipment 20 by usage of the system information broadcast, which is anyway needed to configure the user equipment 20 for channel access, cell level quality parameters and neighbor cell information.

Example ASN.1 additions of this information for intrafrequency coverage - similar for inter-frequency and inter-RAT:

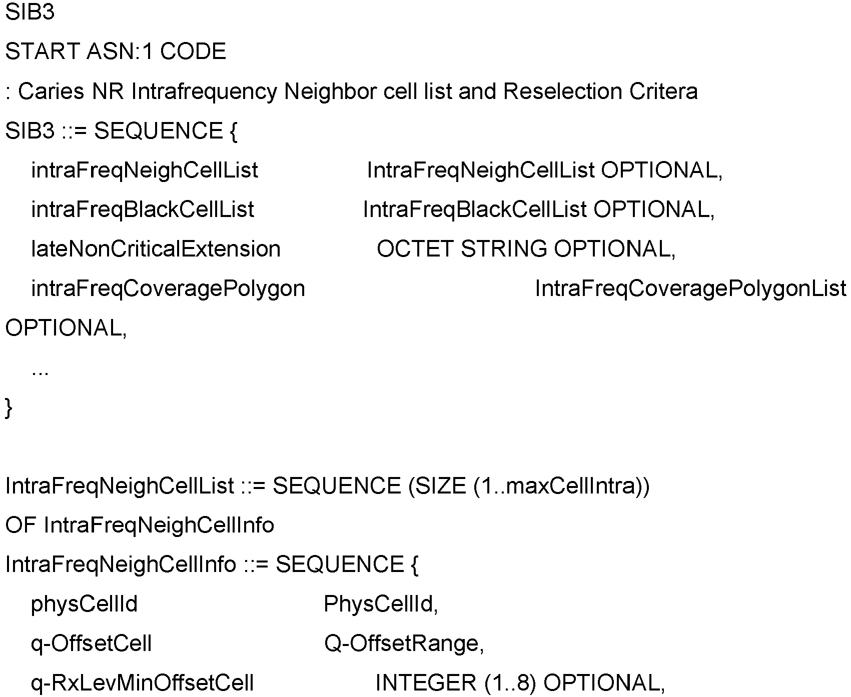

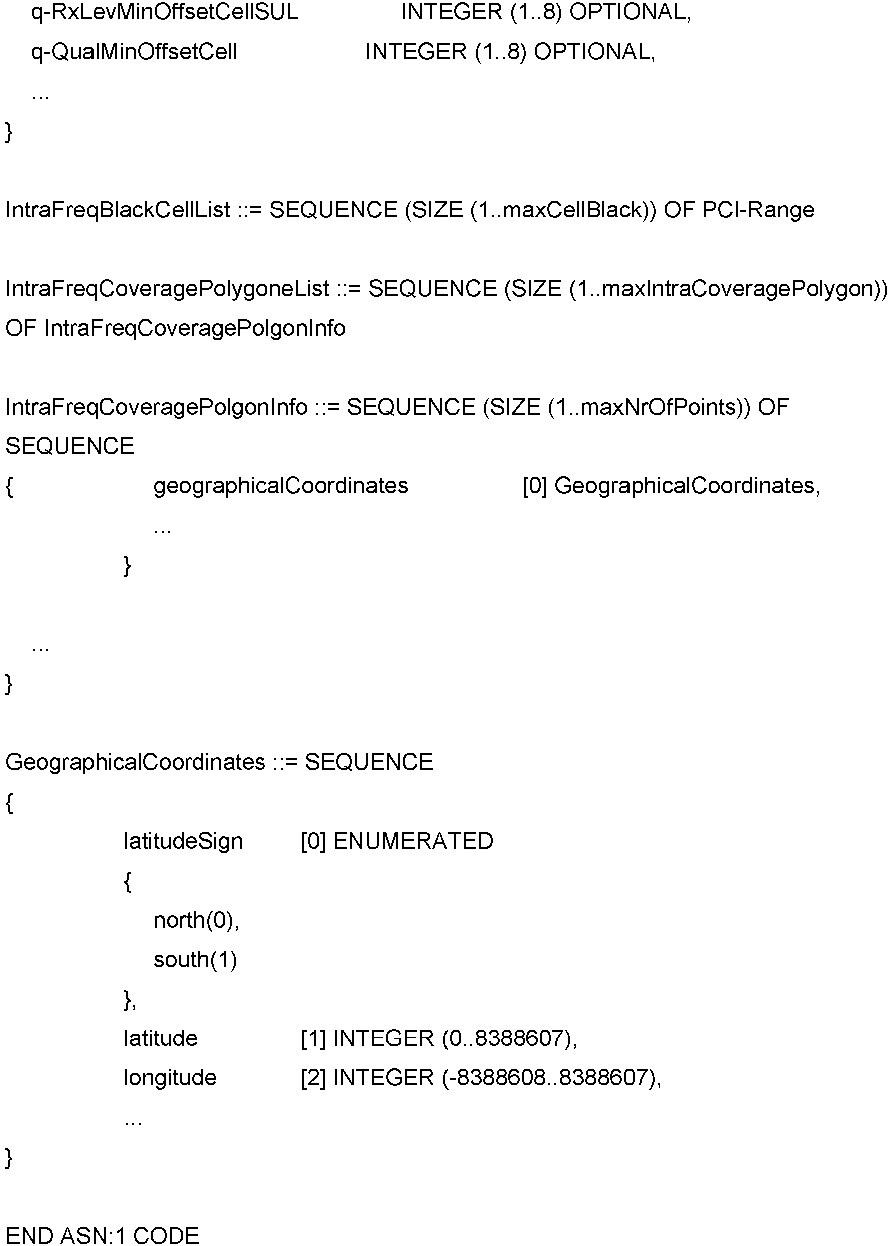

For the provision of multiple coverage map levels depending on the expected cell quality in terms of received RSSI/RSRP/RSCP, the ASN.1 needs to be adapted to reflect the multiple maps.

According to further embodiment according to the present invention, instead of providing - as part of the piece of coverage information 651 - the actual coverage maps (i.e. maps or polygons indicating where cellular coverage is available) it is also possible according to the present invention (alternatively or cumulatively to providing 'positive' coverage information) to indicate expected coverage holes ("white spots", i.e. 'negative' coverage (or absence of ('positive') coverage)) according to similar principles as outlined above.
Especially, the provision of coverage maps, i.e. coverage information 650 or pieces of coverage information 651, can be based on 3GPP defined MDT (minimization of drive test) technology, which is based on customer crowd-based measurements to build and update the coverage maps (which might be initially build on network planning data). Selective map provision to a considered user equipment 20 might be built on ML/AI processes which customize the content (of the piece of coverage information 651) on the movement / mobility profile of the particular device, i.e. the considered user equipment 20.

## Claims

1. Method for providing communication services to a user equipment (20) using an access network (110) of or associated with a mobile communication network (100), wherein the user equipment (20), while being located in or near a first geographical area (250), is able or has a high likelihood to be able to be connected to or to be served by at least one base station entity of the access network (110), and wherein the user equipment (20), while being located in or near a second geographical area (260), is unable or has a low likelihood to be able to be connected to or to be served by any base station entity of the access network (110) or by any base station entity of another access network, wherein by means of coverage information (650) that is, at least in part, able to be transmitted to and received by the user equipment (20), the first geographical area (250) and the second geographical area (260) is able to be indicated or referenced in a manner such that the coverage information (650) indicates - or that it is derivable from the coverage information (650) - to use, at different locations of the first and second geographical area (250, 260), different location-dependent sets of connection parameters in order for the user equipment (20) to be able to get, or to be provided with, radio coverage while being located at such different locations,
wherein the user equipment (20) comprises a location detection means or capability (25) for determining at least an indication or an approximation of the current location of the user equipment (20),
**characterized in that**, in order for the user equipment (20) to be provided with communication services, the method comprises the following steps:
-- in a first step, the user equipment (20) receives, at a first point in time or during a first time interval, a piece of coverage information (651), the piece of coverage information (651) being or corresponding to a part of the coverage information (650), wherein the coverage information (650) corresponds to a rather large geographical area and the piece of coverage information (651) corresponds to a part of the geographical area of the coverage information (650) regarding the geographical area that is currently - dependent on the present and/or past movement of the user equipment (20) - relevant for the user equipment (20),
-- in a second step, the user equipment (20) determines, at a second point in time and using its location detection means or capability (25), an indication or an approximation of its current location, and the user equipment (20) further determines, based on both the indication or the approximation of its current location and based on the piece of coverage information (651) or its content, the location-dependent set of connection parameters, corresponding to the determined current location and to be used in order to get or to be provided with radio coverage.

2. Method according to claim 1, wherein the location-dependent set of connection parameters correspond to or comprise at least one out of the following:
-- an information regarding or indicating the frequency band to be used and/or regarding or indicating the frequency to be used, especially the frequency to be used per frequency band, especially for the mobile communication network (100) being the current registered public land mobile network of the user equipment (20),
-- an information regarding or indicating the radio access technology to be used, especially for the current registered public land mobile network,
-- an information regarding another mobile communication network (200) being an alternative public land mobile network.

3. Method according to one of the preceding claims, wherein the mobile communication network (100) comprises a coverage database (600) or a coverage information entity or functionality with a coverage database (600) or a coverage database (600) is accessible via the mobile communication network (100), wherein the coverage database (600) comprises the coverage information (650) or the coverage information (650) is retrievable using the coverage database (600),
wherein the coverage database (600) and/or the user equipment (20) accessing the coverage database (600) is especially realized:
-- using an open radio access network, Open-RAN, architecture, especially directly allowing the user equipment (20) to access the coverage database (600), especially through a user plane bearer and/or an enhanced version of the control plane to a radio intelligent controller, RIC, providing a runtime environment for xapps, and/or
-- using service based architecture, SBA, framework defined in 3GPP, especially by means of the coverage database (600) being realized as a network function for coverage service provision, being able to be accessed by the user equipment (20), wherein especially a defined database provides the piece of coverage information (651) to the user equipment (20) through a coverage data network function, CDNF.

4. Method according to one of the preceding claims, wherein a definition of the piece of coverage information (651), and especially its geographical extent, is performed taking into account the likely subsequent movement of the user equipment (20) during a predetermined future time interval of, e.g., a couple of minutes or an hour or a couple of hours,
wherein especially the piece of coverage information (651), and especially its geographical extent, is defined either by the user equipment (20) and/or by the mobile communication network (100).

5. Method according to one of the preceding claims, wherein the piece of coverage information (651) is requested, by the user equipment (20), to be transmitted to the user equipment (20).

6. Method according to one of the preceding claims, wherein the piece of coverage information (651) is transmitted, to the user equipment (20), by the mobile communication network (100), especially the respective radio cell currently serving the user equipment (20), using
-- control plane signaling, especially radio resource control signaling in a 3GPP defined radio access technology, especially LTE, NR, or 6G, especially either at establishment of the initial connection or at another point in time, and/or
-- system information broadcast.

7. Method according to one of the preceding claims, wherein the piece of coverage information (651) comprises local definitions of parts of the first geographical area (250) and/or of parts of the second geographical area (260), especially using polygons or polygon information, to describe the respective parts of the first and/or second geographical area (250, 260), and preferably the respective or corresponding expected coverage level, especially per frequency or frequency band and/or per radio access technology and/or per public land mobile network and/or per radio quality level, especially in steps of 5 dB or in steps of 10 dB or in steps of 20 dB or in steps of more than 20 dB.

8. Method according to one of the preceding claims, wherein the coverage information (650) and/or the piece of coverage information (651) comprises location-dependent information regarding the radio quality level to be expected and/or regarding expected coverage holes or white spots,
wherein especially the coverage information (650) and/or the piece of coverage information (651) is defined or obtained using artificial intelligence or machine learning algorithms, especially as part of the coverage data network function, CDNF in order to optimized the value or the relevance of the database content,
wherein especially the coverage information (650), and as a consequence also the piece of coverage information (651), is defined and/or generated, at least partly, using measurements performed previously or coverage information reported previously by a plurality of user equipments, especially using minimization of drive test, MDT, techniques.

9. Method according to one of the preceding claims, wherein the location-dependent information - contained in the coverage information (650) and/or the piece of coverage information (651) - regarding the radio quality level to be expected corresponds to one or a plurality of different typical or standardized usage scenarios of the user equipment (20), especially corresponding to an indoor usage of the user equipment (20), or to an outdoor usage, or to a usage abord a vehicle or a means of transport,
wherein especially the location-dependent information regarding the radio quality level to be expected differs in case of different usage scenarios considered,
wherein especially, based on a comparison of the radio quality level to be expected and an actual radio quality level experienced or measured by the user equipment (20), the user equipment assesses the current actual radio quality level.

10. Method according to one of the preceding claims, wherein the first point in time or the first time interval, on the one hand, and the second point in time, on the other hand, occur either rather simultaneously or are separated in time by at least several seconds, several minutes, several hours, several days or even several weeks.

11. Method according to one of the preceding claims, wherein the location detection means or capability (25) of the user equipment (20) is able to determine at least an indication or an approximation of the current location of the user equipment (20) by means of at least one out of the following:
-- global navigation satellite system, GNSS, capabilities of the location detection means or capability (25), especially assisted global navigation satellite system, A-GNSS, capabilities,
-- location detection capabilities based on using observed time difference of arrival, OTDOA, and/or enhanced cell ID, ECID,
-- location detection capabilities based on radio frequency fingerprinting,
-- location detection capabilities based on measurements of inertial sensors of the user equipment (20), especially together with sporadic location information transmitted to the user equipment (20).

12. User equipment (20) for receiving communication services using an access network (110) of or associated with a mobile communication network (100), wherein the user equipment (20), while being located in or near a first geographical area (250), is able or has a high likelihood to be able to be connected to or to be served by at least one base station entity of the access network (110), and wherein the user equipment (20), while being located in or near a second geographical area (260), is unable or has a low likelihood to be able to be connected to or to be served by any base station entity of the access network (110) or by any base station entity of another access network, wherein by means of coverage information (650) that is, at least in part, able to be transmitted to and received by the user equipment (20), the first geographical area (250) and the second geographical area (260) is able to be indicated or referenced in a manner such that the coverage information (650) indicates - or that it is derivable from the coverage information (650) - to use, at different location of the first and second geographical area (250, 260), different location-dependent sets of connection parameters in order for the user equipment (20) to be able to get, or to be provided with, radio coverage while being located at such different locations,
wherein the user equipment (20) comprises a location detection means or capability (25) for determining at least an indication or an approximation of the current location of the user equipment (20),
**characterized in that**, in order for the user equipment (20) to be provided with communication services, the user equipment (20) is configured such that:
-- in a first step, the user equipment (20) receives, at a first point in time or during a first time interval, a piece of coverage information (651), the piece of coverage information (651) being or corresponding to a part of the coverage information (650), wherein the coverage information (650) corresponds to a rather large geographical area and the piece of coverage information (651) corresponds to a part of the geographical area of the coverage information (650) regarding the geographical area that is currently - dependent on the present and/or past movement of the user equipment (20) - relevant for the user equipment (20),
-- in a second step, the user equipment (20) determines, at a second point in time and using its location detection means or capability (25), an indication or an approximation of its current location, and the user equipment (20) further determines, based on both the indication or the approximation of its current location and based on the piece of coverage information (651) or its content, the location-dependent set of connection parameters, corresponding to the determined current location and to be used in order to get or to be provided with radio coverage.

13. System for providing communication services to a user equipment (20) using an access network (110) of or associated with the mobile communication network (100), wherein the system comprises the mobile communication network (100) and the user equipment (20), wherein the user equipment (20), while being located in or near a first geographical area (250), is able or has a high likelihood to be able to be connected to or to be served by at least one base station entity of the access network (110), and wherein the user equipment (20), while being located in or near a second geographical area (260), is unable or has a low likelihood to be able to be connected to or to be served by any base station entity of the access network (110) or by any base station entity of another access network,
wherein by means of coverage information (650) that the mobile communication network (100) is able to transmit, at least in part, to the user equipment (20), the first geographical area (250) and the second geographical area (260) is able to be indicated or referenced in a manner such that the coverage information (650) indicates - or that it is derivable from the coverage information (650) - to use, at different locations of the first and second geographical area (250, 260), different location-dependent sets of connection parameters in order for radio coverage being provided to the user equipment (20) while being located at such locations,
wherein the user equipment (20) has the capability for determining at least an indication or an approximation of the current location of the user equipment (20),
**characterized in that**, in order for the user equipment (20) to be provided with communication services, the system is configured such that:
-- at a first point in time or during a first time interval, the mobile communication network (100) transmits, and the user equipment (20) receives, a piece of coverage information (651), the piece of coverage information (651) being or corresponding to a part of the coverage information (650), wherein the coverage information (650) corresponds to a rather large geographical area and the piece of coverage information (651) corresponds to a part of the geographical area of the coverage information (650) regarding the geographical area that is currently - dependent on the present and/or past movement of the user equipment (20) - relevant for the user equipment (20),
-- at a second point in time, the system or mobile communication network (100) receives, from the user equipment (20), a connection request and provides radio coverage, wherein the connection request corresponds to or uses the location-dependent set of connection parameters that the user equipment (20) is able to determine based on the determination of its current location and based on the piece of coverage information (651) or its content.

14. Program comprising a computer readable program code, which, when executed in a system comprising a mobile communication network (100) and a user equipment (20), causes the system to perform a method according one of claims 1 to 11.

15. Computer-readable medium comprising instructions which when executed in a system comprising a mobile communication network (100) and a user equipment (20), causes the system to perform a method according one of claims 1 to 11.

## Patentansprüche

1. Verfahren zum Bereitstellen von Kommunikationsdiensten für eine Benutzerausrüstung (20) unter Verwendung eines Zugangsnetzes (110) von oder in Verknüpfung mit einem Mobilkommunikationsnetz (100), wobei die Benutzerausrüstung (20), während sie sich in einem oder in der Nähe eines ersten geographischen Gebietes (250) befindet, in der Lage ist oder eine hohe Wahrscheinlichkeit hat, in der Lage zu sein, mit mindestens einer Basisstationsentität des Zugangsnetzes (110) verbunden oder durch diese bedient zu werden, und wobei die Benutzerausrüstung (20), während sie sich in einem oder in der Nähe eines zweiten geographischen Gebietes (260) befindet, nicht in der Lage ist oder eine geringe Wahrscheinlichkeit hat, in der Lage zu sein, mit einer Basisstationsentität des Zugangsnetzes (110) oder mit einer Basisstationsentität eines anderen Zugangsnetzes verbunden oder durch diese bedient zu werden,
wobei mittels Versorgungsreichweiteninformationen (650), die mindestens teilweise an die Benutzerausrüstung (20) sendbar und durch diese empfangbar sind, das erste geografische Gebiet (250) und das zweite geografische Gebiet (260) in einer solchen Weise angebbar oder referenzierbar sind, dass die Versorgungsreichweiteninformationen (650) angeben - oder dass aus den Versorgungsreichweiteninformationen (650) ableitbar ist - an verschiedenen Standorten des ersten und des zweiten geografischen Gebietes (250, 260) verschiedene standortabhängige Sätze von Verbindungsparametern zu verwenden, damit die Benutzerausrüstung (20) in der Lage ist, eine Funkversorgung zu bekommen oder mit einer Funkversorgung versorgt zu werden, während sie sich an solchen verschiedenen Standorten befindet,
wobei die Benutzerausrüstung (20) ein Standortdetektionsmittel oder eine Standortdetektionsfähigkeit (25) umfasst, um mindestens eine Angabe oder eine Annäherung des momentanen Standortes der Benutzerausrüstung (20) zu bestimmen,
**dadurch gekennzeichnet, dass**, um die Benutzerausrüstung (20) mit Kommunikationsdiensten zu versorgen, das Verfahren die folgenden Schritte umfasst:
- in einem ersten Schritt empfängt die Benutzerausrüstung (20) an einem ersten Zeitpunkt oder während eines ersten Zeitintervalls eine Versorgungsreichweiteninformation (651), wobei die Versorgungsreichweiteninformation (651) ein Teil der Versorgungsreichweiteninformationen (650) ist oder einem Teil von ihnen entspricht, wobei die Versorgungsreichweiteninformationen (650) einem recht großen geographischen Gebiet entsprechen und die Versorgungsreichweiteninformation (651) einem Teil des geographischen Gebietes der Versorgungsreichweiteninformationen (650) bezüglich des geographischen Gebietes entspricht, das momentan - in Abhängigkeit von der gegenwärtigen und/oder früheren Bewegung der Benutzerausrüstung (20) - für die Benutzerausrüstung (20) relevant ist,
- in einem zweiten Schritt bestimmt die Benutzerausrüstung (20) an einem zweiten Zeitpunkt und unter Verwendung ihres Standortdetektionsmittels oder ihrer Standortdetektionsfähigkeit (25) eine Angabe oder eine Annäherung ihres momentanen Standortes und die Benutzerausrüstung (20) bestimmt des Weiteren auf der Grundlage sowohl der Angabe oder der Annäherung ihres momentanen Standortes als auch auf der Grundlage der Versorgungsreichweiteninformation (651) oder ihres Inhalts den standortabhängigen Satz von Verbindungsparametern, der dem bestimmten momentanen Standort entspricht und zu verwenden ist, um Funkversorgung zu bekommen oder mit Funkversorgung versorgt zu werden.

2. Verfahren nach Anspruch 1, wobei der standortabhängige Satz von Verbindungsparametern mindestens einem vom Folgendem entspricht oder eines von Folgendem umfasst:
- Informationen, die das zu verwendende Frequenzband betreffen oder angeben und/oder die zu verwendende Frequenz betreffen oder angeben, insbesondere die zu verwendende Frequenz pro Frequenzband, insbesondere für das Mobilkommunikationsnetz (100), das das momentane registrierte öffentliche terrestrische Mobilfunknetz der Benutzerausrüstung (20) ist,
- Informationen, die die zu verwendende Funkzugangstechnologie betreffen oder angeben, insbesondere für das momentane registrierte öffentliche terrestrische Mobilfunknetz,
- Informationen bezüglich eines anderen Mobilkommunikationsnetzes (200), das ein alternatives öffentliches terrestrisches Mobilfunknetz ist.

3. Verfahren nach einem der vorangehenden Ansprüche, wobei das Mobilkommunikationsnetz (100) eine Versorgungsreichweitendatenbank (600) oder eine Versorgungsreichweiteninformationsentität oder -funktionalität mit einer Versorgungsreichweitendatenbank (600) umfasst oder eine Versorgungsreichweitendatenbank (600) über das Mobilkommunikationsnetz (100) zugänglich ist, wobei die Versorgungsreichweitendatenbank (600) die Versorgungsreichweiteninformationen (650) umfasst oder die Versorgungsreichweiteninformationen (650) unter Verwendung der Versorgungsreichweitendatenbank (600) abrufbar sind, wobei die Versorgungsreichweitendatenbank (600) und/oder die Benutzerausrüstung (20), die auf die Versorgungsreichweitendatenbank (600) zugreift, insbesondere realisiert wird:
- unter Verwendung einer Open Radio Access Network (Open-RAN)-Architektur, die es insbesondere der Benutzerausrüstung (20) direkt erlaubt, auf die Versorgungsreichweitendatenbank (600) zuzugreifen, insbesondere über einen Benutzerebenenträger und/oder eine erweiterte Version der Steuerungsebene zu einem intelligenten Funk-Controller (RIC), der eine Laufzeitumgebung für xapps bereitstellt, und/oder
- unter Verwendung des in 3GPP definierten Rahmens einer dienstorientierten Architektur (SBA Framework), insbesondere mittels der Versorgungsreichweitendatenbank (600), die als eine Netzfunktion für eine Versorgungsreichweitendienstbereitstellung realisiert ist und auf die die Benutzerausrüstung (20) zugreifen kann, wobei insbesondere eine definierte Datenbank die Versorgungsreichweiteninformation (651) durch eine Versorgungsreichweitendatennetzfunktion (CDNF) für die Benutzerausrüstung (20) bereitstellt.

4. Verfahren nach einem der vorangehenden Ansprüche, wobei eine Definition der Versorgungsreichweiteninformation (651) und insbesondere ihrer geographischen Erstreckung unter Berücksichtigung der wahrscheinlichen anschließenden Bewegung der Benutzerausrüstung (20) während eines zuvor festgelegten zukünftigen Zeitintervalls von zum Beispiel ein paar Minuten oder einer Stunde oder ein paar Stunden durchgeführt wird,
wobei insbesondere die Versorgungsreichweiteninformation (651), und insbesondere deren geografische Erstreckung, entweder durch die Benutzerausrüstung (20) und/oder durch das Mobilkommunikationsnetz (100) definiert wird.

5. Verfahren nach einem der vorangehenden Ansprüche, wobei die Versorgungsreichweiteninformation (651) durch die Benutzerausrüstung (20) angefordert wird, um an die Benutzerausrüstung (20) gesendet zu werden.

6. Verfahren nach einem der vorangehenden Ansprüche, wobei die Versorgungsreichweiteninformation (651) durch das Mobilkommunikationsnetz (100), insbesondere die jeweilige Funkzelle, die die Benutzerausrüstung (20) momentan bedient, unter Verwendung von Folgendem an die Benutzerausrüstung (20) gesendet wird:
- Steuerungsebenensignalisierung, insbesondere Funkressourcensteuerungssignalisierung in einer 3GPPdefinierten Funkzugangstechnologie, insbesondere LTE, NR oder 6G, insbesondere entweder beim Aufbau der anfänglichen Verbindung oder an einem anderen Zeitpunkt, und/oder
- Systeminformationsrundsendung.

7. Verfahren nach einem der vorangehenden Ansprüche, wobei die Versorgungsreichweiteninformation (651) lokale Definitionen von Teilen des ersten geographischen Gebietes (250) und/oder von Teilen des zweiten geographischen Gebietes (260), insbesondere unter Verwendung von Polygonen oder Polygoninformationen, umfasst, um die jeweiligen Teile des ersten und/oder des zweiten geographischen Gebietes (250, 260), und bevorzugt den jeweiligen oder entsprechend erwarteten Versorgungsgrad, insbesondere pro Frequenz oder Frequenzband und/oder pro Funkzugangstechnologie und/oder pro öffentlichem terrestrischem Mobilfunknetz und/oder pro Funkqualitätsniveau, insbesondere in Schritten von 5 dB oder in Schritten von 10 dB oder in Schritten von 20 dB oder in Schritten von mehr als 20 dB, zu beschreiben.

8. Verfahren nach einem der vorangehenden Ansprüche, wobei die Versorgungsreichweiteninformationen (650) und/oder die Versorgungsreichweiteninformation (651) standortabhängige Informationen bezüglich des zu erwartenden Funkqualitätsniveaus und/oder bezüglich erwarteter Versorgungslöcher oder weiße Flecken umfassen,
wobei insbesondere die Versorgungsreichweiteninformationen (650) und/oder die Versorgungsreichweiteninformation (651) unter Verwendung von Algorithmen der künstlichen Intelligenz oder des maschinellen Lernens, insbesondere als Teil der Versorgungsreichweitendatennetzfunktion (CDNF), definiert oder erhalten wird, um den Wert oder die Relevanz des Datenbankinhalts zu optimieren,
wobei insbesondere die Versorgungsreichweiteninformationen (650), und infolge dessen auch die Versorgungsreichweiteninformation (651), mindestens teilweise unter Verwendung von Messungen, die zuvor durchgeführt wurden, oder Versorgungsreichweiteninformationen, die zuvor durch mehrere Benutzerausrüstungen gemeldet wurden, insbesondere unter Verwendung von Minimization of Drive Test (MDT)-Techniken, definiert und/oder generiert werden.

9. Verfahren nach einem der vorangehenden Ansprüche, wobei die - in den Versorgungsreichweiteninformationen (650) und/oder der Versorgungsreichweiteninformation (651) enthaltenen - standortabhängigen Informationen bezüglich des zu erwartenden Funkqualitätsniveaus einem oder mehreren verschiedenen typischen oder standardisierten Nutzungsszenarien der Benutzerausrüstung (20), insbesondere einer Nutzung der Benutzerausrüstung (20) in geschlossenen Räumen oder einer Nutzung im Freien oder einer Nutzung an Bord eines Fahrzeugs oder eines Verkehrsmittels, entsprechen,
wobei sich insbesondere die standortabhängigen Informationen bezüglich des zu erwartenden Funkqualitätsniveaus im Fall verschiedener betrachteter Nutzungsszenarien unterscheiden,
wobei insbesondere auf der Grundlage eines Vergleichs des zu erwartenden Funkqualitätsniveaus und eines durch die Benutzerausrüstung (20) wahrgenommenen oder gemessenen tatsächlichen Funkqualitätsniveaus die Benutzerausrüstung das momentane tatsächliche Funkqualitätsniveau beurteilt.

10. Verfahren nach einem der vorangehenden Ansprüche, wobei der erste Zeitpunkt oder das erste Zeitintervall einerseits und der zweite Zeitpunkt andererseits entweder weitgehend gleichzeitig eintreten oder zeitlich um mindestens mehrere Sekunden, mehrere Minuten, mehrere Stunden, mehrere Tage oder sogar mehrere Wochen getrennt sind.

11. Verfahren nach einem der vorangehenden Ansprüche, wobei das Standortdetektionsmittel oder die Standortdetektionsfähigkeit (25) der Benutzerausrüstung (20) in der Lage ist, mindestens eine Angabe oder eine Annäherung des momentanen Standortes der Benutzerausrüstung (20) mittels mindestens eines von Folgendem zu bestimmen:
- Global Navigation Satellite System (GNSS)-Fähigkeiten des Standortdetektionsmittels oder der Standortdetektionsfähigkeit (25), insbesondere Assisted Global Navigation Satellite System (A-GNSS)-Fähigkeiten,
- Standortdetektionsfähigkeiten auf der Grundlage der Verwendung von Observed Time Difference Of Arrival (OTDOA) und/oder Enhanced Cell ID (ECID),
- Standortdetektionsfähigkeiten auf der Grundlage von Hochfrequenzfingerabdruckmessung;
- Standortdetektionsfähigkeiten auf der Grundlage von Messungen von Trägheitssensoren der Benutzerausrüstung (20), insbesondere zusammen mit sporadischen Standortinformationen, die an die Benutzerausrüstung (20) gesendet werden.

12. Benutzerausrüstung (20) zum Empfangen von Kommunikationsdiensten unter Verwendung eines Zugangsnetzes (110) von oder in Verknüpfung mit einem Mobilkommunikationsnetz (100), wobei die Benutzerausrüstung (20), während sie sich in einem oder in der Nähe eines ersten geographischen Gebietes (250) befindet, in der Lage ist oder eine hohe Wahrscheinlichkeit hat, in der Lage zu sein, mit mindestens einer Basisstationsentität des Zugangsnetzes (110) verbunden oder durch diese bedient zu werden, und wobei die Benutzerausrüstung (20), während sie sich in einem oder in der Nähe eines zweiten geographischen Gebietes (260) befindet, nicht in der Lage ist oder eine geringe Wahrscheinlichkeit hat, in der Lage zu sein, mit einer Basisstationsentität des Zugangsnetzes (110) oder mit einer Basisstationsentität eines anderen Zugangsnetzes verbunden oder durch diese bedient zu werden,
wobei mittels Versorgungsreichweiteninformationen (650), die mindestens teilweise an die Benutzerausrüstung (20) sendbar und durch diese empfangbar sind, das erste geografische Gebiet (250) und das zweite geografische Gebiet (260) in einer solchen Weise angebbar oder referenzierbar sind, dass die Versorgungsreichweiteninformationen (650) angeben - oder dass aus den Versorgungsreichweiteninformationen (650) ableitbar ist - an verschiedenen Standorten des ersten und des zweiten geografischen Gebietes (250, 260) verschiedene standortabhängige Sätze von Verbindungsparametern zu verwenden, damit die Benutzerausrüstung (20) in der Lage ist, eine Funkversorgung zu bekommen oder mit einer Funkversorgung versorgt zu werden, während sie sich an solchen verschiedenen Standorten befindet,
wobei die Benutzerausrüstung (20) ein Standortdetektionsmittel oder eine Standortdetektionsfähigkeit (25) umfasst, um mindestens eine Angabe oder eine Annäherung des momentanen Standortes der Benutzerausrüstung (20) zu bestimmen,
**dadurch gekennzeichnet, dass**, um die Benutzerausrüstung (20) mit Kommunikationsdiensten zu versorgen, die Benutzerausrüstung (20) so konfiguriert ist, dass:
- in einem ersten Schritt die Benutzerausrüstung (20) an einem ersten Zeitpunkt oder während eines ersten Zeitintervalls eine Versorgungsreichweiteninformation (651) empfängt, wobei die Versorgungsreichweiteninformation (651) ein Teil der Versorgungsreichweiteninformationen (650) ist oder einem Teil von ihnen entspricht, wobei die Versorgungsreichweiteninformationen (650) einem recht großen geographischen Gebiet entsprechen und die Versorgungsreichweiteninformation (651) einem Teil des geographischen Gebietes der Versorgungsreichweiteninformationen (650) bezüglich des geographischen Gebietes entspricht, das momentan - in Abhängigkeit von der gegenwärtigen und/oder früheren Bewegung der Benutzerausrüstung (20) - für die Benutzerausrüstung (20) relevant ist,
- in einem zweiten Schritt die Benutzerausrüstung (20) an einem zweiten Zeitpunkt und unter Verwendung ihres Standortdetektionsmittels oder ihrer Standortdetektionsfähigkeit (25) eine Angabe oder eine Annäherung ihres momentanen Standortes bestimmt und die Benutzerausrüstung (20) des Weiteren auf der Grundlage sowohl der Angabe oder der Annäherung ihres momentanen Standortes als auch auf der Grundlage der Versorgungsreichweiteninformation (651) oder ihres Inhalts den standortabhängigen Satz von Verbindungsparametern bestimmt, der dem bestimmten momentanen Standort entspricht und zu verwenden ist, um Funkversorgung zu bekommen oder mit Funkversorgung versorgt zu werden.

13. System zum Bereitstellen von Kommunikationsdiensten für eine Benutzerausrüstung (20) unter Verwendung eines Zugangsnetzes (110) des oder in Verbindung mit dem Mobilkommunikationsnetz (100), wobei das System das Mobilkommunikationsnetz (100) und die Benutzerausrüstung (20) umfasst, wobei die Benutzerausrüstung (20), während sie sich in einem oder in der Nähe eines ersten geographischen Gebietes (250) befindet, in der Lage ist oder eine hohe Wahrscheinlichkeit hat, in der Lage zu sein, mit mindestens einer Basisstationsentität des Zugangsnetzes (110) verbunden oder durch diese bedient zu werden, und wobei die Benutzerausrüstung (20), während sie sich in einem oder in der Nähe eines zweiten geographischen Gebietes (260) befindet, nicht in der Lage ist oder eine geringe Wahrscheinlichkeit hat, in der Lage zu sein, mit einer Basisstationsentität des Zugangsnetzes (110) oder mit einer Basisstationsentität eines anderen Zugangsnetzes verbunden oder durch diese bedient zu werden,
wobei mittels Versorgungsreichweiteninformationen (650), die das Mobilkommunikationsnetz (100) mindestens teilweise an die Benutzerausrüstung (20) zu senden in der Lage ist, das erste geographische Gebiet (250) und das zweite geographische Gebiet (260) in einer solchen Weise angebbar oder referenzierbar sind, dass die Versorgungsreichweiteninformationen (650) angeben - oder dass aus den Versorgungsreichweiteninformationen (650) ableitbar ist - an verschiedenen Standorten des ersten und des zweiten geografischen Gebietes (250, 260) verschiedene standortabhängige Sätze von Verbindungsparametern zu verwenden, um eine Funkversorgung für die Benutzerausrüstung (20) bereitzustellen, während sie sich an solchen Standorten befindet,
wobei die Benutzerausrüstung (20) die Fähigkeit besitzt, mindestens eine Angabe oder eine Annäherung des momentanen Standortes der Benutzerausrüstung (20) zu bestimmen, **dadurch gekennzeichnet, dass**, um die Benutzerausrüstung (20) mit Kommunikationsdiensten zu versorgen, das System so konfiguriert ist, dass:
- an einem ersten Zeitpunkt oder während eines ersten Zeitintervalls das Mobilkommunikationsnetz (100) eine Versorgungsreichweiteninformation (651) sendet und die Benutzerausrüstung (20) eine Versorgungsreichweiteninformation (651) empfängt, wobei die Versorgungsreichweiteninformation (651) ein Teil der Versorgungsreichweiteninformationen (650) ist oder einem Teil von ihnen entspricht, wobei die Versorgungsreichweiteninformationen (650) einem recht großen geographischen Gebiet entsprechen und die Versorgungsreichweiteninformation (651) einem Teil des geographischen Gebietes der Versorgungsreichweiteninformationen (650) bezüglich des geographischen Gebietes entspricht, das momentan - in Abhängigkeit von der gegenwärtigen und/oder früheren Bewegung der Benutzerausrüstung (20) - für die Benutzerausrüstung (20) relevant ist,
- an einem zweiten Zeitpunkt das System oder das Mobilkommunikationsnetz (100) von der Benutzerausrüstung (20) eine Verbindungsanforderung empfängt und Funkversorgung bereitstellt, wobei die Verbindungsanforderung dem standortabhängigen Satz von Verbindungsparametern entspricht oder den standortabhängigen Satz von Verbindungsparametern verwendet, den die Benutzerausrüstung (20) auf der Grundlage der Bestimmung ihres momentanen Standortes und auf der Grundlage der Versorgungsreichweiteninformation (651) oder deren Inhalt zu bestimmen in der Lage ist.

14. Programm, umfassend einen computerlesbaren Programmcode, der, wenn er in einem System ausgeführt wird, das ein Mobilkommunikationsnetz (100) und eine Benutzerausrüstung (20) umfasst, das System veranlasst, ein Verfahren nach einem der Ansprüche 1 bis 11 durchzuführen.

15. Computerlesbares Medium, umfassend Instruktionen, die, wenn sie in einem System ausgeführt werden, das ein Mobilkommunikationsnetz (100) und eine Benutzerausrüstung (20) umfasst, das System veranlassen, ein Verfahren nach einem der Ansprüche 1 bis 11 durchzuführen.

## Revendications

1. Procédé de fourniture de services de communication à un équipement utilisateur (20) à l'aide d'un réseau d'accès (110) d'un réseau de communication mobile (100) ou associé à celui-ci, dans lequel l'équipement utilisateur (20), tout en étant situé dans ou à proximité d'une première zone géographique (250), peut ou a une forte probabilité de pouvoir être connecté à ou être desservi par au moins une entité de station de base du réseau d'accès (110), et dans lequel l'équipement utilisateur (20), tout en étant situé dans ou à proximité d'une seconde zone géographique (260), ne peut pas ou a une faible probabilité de pouvoir être connecté à ou être desservi par toute entité de station de base du réseau d'accès (110) ou par toute entité de station de base d'un autre réseau d'accès, dans lequel, au moyen d'informations de couverture (650) qui peuvent, au moins en partie, être transmises à l'équipement utilisateur (20) et reçues par lui, la première zone géographique (250) et la seconde zone géographique (260) peuvent être indiquées ou référencées de manière à ce que les informations de couverture (650) indiquent - ou qui peuvent être dérivées des informations de couverture (650) - l'utilisation, à différents endroits de la première et de la seconde zone géographique (250, 260), de différents ensembles de paramètres de connexion dépendant de l'emplacement afin que l'équipement utilisateur (20) puisse obtenir ou recevoir une couverture radio lorsqu'il se trouve à ces différents endroits,
dans lequel l'équipement utilisateur (20) comprend un moyen ou une capacité de détection d'emplacement (25) pour déterminer au moins une indication ou une approximation de l'emplacement actuel de l'équipement utilisateur (20), **caractérisé en ce que**, pour que l'équipement utilisateur (20) reçoive des services de communication, le procédé comprend les étapes suivantes :
- dans une première étape, l'équipement utilisateur (20) reçoit, à un premier moment ou pendant un premier intervalle de temps, un élément d'information de couverture (651), l'élément d'information de couverture (651) étant ou correspondant à une partie des informations de couverture (650), dans lequel les informations de couverture (650) correspondent à une zone géographique assez vaste et l'élément d'information de couverture (651) correspond à une partie de la zone géographique des informations de couverture (650) concernant la zone géographique qui est actuellement - en fonction du mouvement présent et/ou passé de l'équipement utilisateur (20) - pertinente pour l'équipement utilisateur (20),
- dans une seconde étape, l'équipement utilisateur (20) détermine, à un second moment et à l'aide de son moyen ou de sa capacité de détection d'emplacement (25), une indication ou une approximation de son emplacement actuel, et l'équipement utilisateur (20) détermine en outre, sur la base de l'indication ou de l'approximation de son emplacement actuel et sur la base de l'élément d'information de couverture (651) ou de son contenu, l'ensemble de paramètres de connexion dépendant de l'emplacement, correspondant à l'emplacement actuel déterminé et à utiliser pour obtenir ou recevoir une couverture radio.

2. Procédé selon la revendication 1, dans lequel l'ensemble de paramètres de connexion dépendant de l'emplacement correspond à ou comprend au moins l'un des éléments suivants :
- des informations concernant ou indiquant la bande de fréquences à utiliser et/ou concernant ou indiquant la fréquence à utiliser, en particulier la fréquence à utiliser par bande de fréquences, notamment pour le réseau de communication mobile (100) qui est le réseau mobile terrestre public enregistré actuel de l'équipement utilisateur (20),
- des informations concernant ou indiquant la technologie d'accès radio à utiliser, en particulier pour le réseau mobile terrestre public actuellement enregistré,
- des informations concernant un autre réseau de communication mobile (200) qui est un réseau mobile terrestre public alternatif.

3. Procédé selon l'une des revendications précédentes, dans lequel le réseau de communication mobile (100) comprend une base de données de couverture (600) ou une entité ou fonctionnalité d'informations de couverture avec une base de données de couverture (600) ou une base de données de couverture (600) est accessible par l'intermédiaire du réseau de communication mobile (100), dans lequel la base de données de couverture (600) comprend les informations de couverture (650) ou les informations de couverture (650) peuvent être récupérées à l'aide de la base de données de couverture (600),
dans lequel la base de données de couverture (600) et/ou l'accès à la base de données de couverture (600) par l'équipement utilisateur (20) sont réalisés en particulier :
- en utilisant une architecture de réseau d'accès radio ouvert (Open-RAN), notamment en permettant directement à l'équipement utilisateur (20) d'accéder à la base de données de couverture (600), en particulier par l'intermédiaire d'un support de plan utilisateur et/ou d'une version améliorée du plan de commande d'un contrôleur radio intelligent, RIC, fournissant un environnement d'exécution pour les xapps, et/ou
- en utilisant un cadre d'architecture basée sur les services, SBA, défini dans le 3GPP, notamment au moyen de la base de données de couverture (600) réalisée en tant que fonction de réseau pour la fourniture de services de couverture, à laquelle l'équipement utilisateur (20) peut accéder, dans lequel en particulier une base de données définie fournit l'élément d'information de couverture (651) à l'équipement utilisateur (20) par l'intermédiaire d'une fonction de réseau de données de couverture, CDNF.

4. Procédé selon l'une des revendications précédentes, dans lequel une définition de l'élément d'information de couverture (651), et en particulier de son étendue géographique, est effectuée en tenant compte du mouvement subséquent probable de l'équipement utilisateur (20) pendant un intervalle de temps futur prédéterminé, par exemple de quelques minutes ou d'une heure ou de quelques heures,
dans lequel en particulier l'élément d'information de couverture (651), et en particulier son étendue géographique, sont définis par l'équipement utilisateur (20) et/ou par le réseau de communication mobile (100).

5. Procédé selon l'une des revendications précédentes, dans lequel l'élément d'information de couverture (651) est demandé, par l'équipement utilisateur (20), à être transmis à l'équipement utilisateur (20).

6. Procédé selon l'une des revendications précédentes, dans lequel l'élément d'information de couverture (651) est transmis à l'équipement utilisateur (20) par le réseau de communication mobile (100), en particulier la cellule radio respective desservant actuellement l'équipement utilisateur (20), à l'aide de
- une signalisation de plan de commande, en particulier une signalisation de commande de ressources radio dans une technologie d'accès radio définie par le 3GPP, en particulier LTE, NR ou 6G, notamment lors de l'établissement de la connexion initiale ou à un autre moment, et/ou
- une diffusion d'informations système.

7. Procédé selon l'une des revendications précédentes, dans lequel l'élément d'information de couverture (651) comprend des définitions locales de parties de la première zone géographique (250) et/ou de parties de la seconde zone géographique (260), notamment à l'aide de polygones ou d'informations de polygones, pour décrire les parties respectives de la première et/ou de la seconde zone géographique (250, 260), et de préférence le niveau de couverture attendu respectif ou correspondant, notamment par fréquence ou bande de fréquences et/ou par technologie d'accès radio et/ou par réseau mobile terrestre public et/ou par niveau de qualité radio, notamment par pas de 5 dB ou par pas de 10 dB ou par pas de 20 dB ou par pas de plus de 20 dB.

8. Procédé selon l'une des revendications précédentes, dans lequel les informations de couverture (650) et/ou l'élément d'information de couverture (651) comprennent des informations dépendant de l'emplacement concernant le niveau de qualité radio à attendre et/ou concernant des trous de couverture ou des points blancs attendus,
dans lequel en particulier les informations de couverture (650) et/ou l'élément d'information de couverture (651) sont définis ou obtenus à l'aide d'algorithmes d'intelligence artificielle ou d'apprentissage automatique, notamment dans le cadre de la fonction de réseau de données de couverture, CDNF, afin d'optimiser la valeur ou la pertinence du contenu de la base de données, dans lequel en particulier les informations de couverture (650), et par conséquent également l'élément d'information de couverture (651), sont définis et/ou générés, au moins en partie, à l'aide de mesures effectuées précédemment ou d'informations de couverture communiquées précédemment par une pluralité d'équipements utilisateur, notamment à l'aide de techniques de minimisation des tests d'excitation, MDT.

9. Procédé selon l'une des revendications précédentes, dans lequel les informations dépendant de l'emplacement - contenues dans les informations de couverture (650) et/ou l'élément d'information de couverture (651) - concernant le niveau de qualité radio à attendre correspondent à un ou une pluralité de différents scénarios d'utilisation typiques ou normalisés de l'équipement utilisateur (20), correspondant en particulier à une utilisation intérieure de l'équipement utilisateur (20), ou à une utilisation extérieure, ou à une utilisation à bord d'un véhicule ou d'un moyen de transport,
dans lequel, en particulier, les informations dépendant de l'emplacement concernant le niveau de qualité radio à attendre diffèrent en cas de différents scénarios d'utilisation considérés,
dans lequel, en particulier, sur la base d'une comparaison entre le niveau de qualité radio à attendre et un niveau de qualité radio réel expérimenté ou mesuré par l'équipement utilisateur (20), l'équipement utilisateur évalue le niveau de qualité radio réel actuel.

10. Procédé selon l'une des revendications précédentes, dans lequel le premier moment ou le premier intervalle de temps, d'une part, et le second moment, d'autre part, se produisent soit presque simultanément, soit sont séparés dans le temps par au moins plusieurs secondes, plusieurs minutes, plusieurs heures, plusieurs jours ou même plusieurs semaines.

11. Procédé selon l'une des revendications précédentes, dans lequel le moyen ou la capacité de détection d'emplacement (25) de l'équipement utilisateur (20) peut déterminer au moins une indication ou une approximation de l'emplacement actuel de l'équipement utilisateur (20) au moyen d'au moins l'un des éléments suivants :
- des capacités du système mondial de navigation par satellite, GNSS, du moyen ou de la capacité de détection d'emplacement (25), en particulier des capacités du système mondial de navigation par satellite assisté, A-GNSS,
- des capacités de détection d'emplacement basées sur l'utilisation de la différence de temps d'arrivée observée, OTDOA, et/ou de l'identification améliorée de la cellule, ECID,
- des capacités de détection d'emplacement basées sur l'empreinte des radiofréquences,
- des capacités de détection d'emplacement basées sur des mesures des capteurs inertiels de l'équipement utilisateur (20), en particulier conjointement avec des informations d'emplacement sporadiques transmises à l'équipement utilisateur (20).

12. Équipement utilisateur (20) pour recevoir des services de communication à l'aide d'un réseau d'accès (110) d'un réseau de communication mobile (100) ou associé à celui-ci, dans lequel l'équipement utilisateur (20), tout en étant situé dans ou à proximité d'une première zone géographique (250), peut ou a une forte probabilité de pouvoir être connecté à ou être desservi par au moins une entité de station de base du réseau d'accès (110), et dans lequel l'équipement utilisateur (20), tout en étant situé dans ou à proximité d'une seconde zone géographique (260), ne peut pas ou a une faible probabilité de pouvoir être connecté à ou être desservi par toute entité de station de base du réseau d'accès (110) ou par toute entité de station de base d'un autre réseau d'accès, dans lequel, au moyen d'informations de couverture (650) qui peuvent, au moins en partie, être transmises à l'équipement utilisateur (20) et reçues par lui, la première zone géographique (250) et la seconde zone géographique (260) peuvent être indiquées ou référencées de manière à ce que les informations de couverture (650) indiquent - ou qui peuvent être dérivées des informations de couverture (650) - l'utilisation, à différents endroits de la première et de la seconde zone géographique (250, 260), de différents ensembles de paramètres de connexion dépendant de l'emplacement afin que l'équipement utilisateur (20) puisse obtenir ou recevoir une couverture radio lorsqu'il se trouve à ces différents endroits,
dans lequel l'équipement utilisateur (20) comprend un moyen ou une capacité de détection d'emplacement (25) pour déterminer au moins une indication ou une approximation de l'emplacement actuel de l'équipement utilisateur (20), **caractérisé en ce que**, pour que l'équipement utilisateur (20) reçoive des services de communication, l'équipement utilisateur (20) est configuré de telle sorte que :
- dans une première étape, l'équipement utilisateur (20) reçoit, à un premier moment ou pendant un premier intervalle de temps, un élément d'information de couverture (651), l'élément d'information de couverture (651) étant ou correspondant à une partie des informations de couverture (650), dans lequel les informations de couverture (650) correspondent à une zone géographique assez vaste et l'élément d'information de couverture (651) correspond à une partie de la zone géographique des informations de couverture (650) concernant la zone géographique qui est actuellement - en fonction du mouvement présent et/ou passé de l'équipement utilisateur (20) - pertinente pour l'équipement utilisateur (20),
- dans une seconde étape, l'équipement utilisateur (20) détermine, à un second moment et à l'aide de son moyen ou de sa capacité de détection d'emplacement (25), une indication ou une approximation de son emplacement actuel, et l'équipement utilisateur (20) détermine en outre, sur la base de l'indication ou de l'approximation de son emplacement actuel et sur la base de l'élément d'information de couverture (651) ou de son contenu, l'ensemble de paramètres de connexion dépendant de l'emplacement, correspondant à l'emplacement actuel déterminé et à utiliser pour obtenir ou recevoir une couverture radio.

13. Système de fourniture de services de communication à un équipement utilisateur (20) à l'aide d'un réseau d'accès (110) du réseau de communication mobile (100) ou associé à celui-ci, dans lequel le système comprend le réseau de communication mobile (100) et l'équipement utilisateur (20), dans lequel l'équipement utilisateur (20), tout en étant situé dans ou à proximité d'une première zone géographique (250), peut ou a une forte probabilité de pouvoir être connecté à ou être desservi par au moins une entité de station de base du réseau d'accès (110), et dans lequel l'équipement utilisateur (20), tout en étant situé dans ou à proximité d'une seconde zone géographique (260), ne peut pas ou a une faible probabilité de pouvoir être connecté à ou être desservi par toute entité de station de base du réseau d'accès (110) ou par toute entité de station de base d'un autre réseau d'accès,
dans lequel, au moyen d'informations de couverture (650) que le réseau de communication mobile (100) peut transmettre, au moins en partie, à l'équipement utilisateur (20), la première zone géographique (250) et la seconde zone géographique (260) peuvent être indiquées ou référencées de manière à ce que les informations de couverture (650) indiquent - ou qui peuvent être dérivées des informations de couverture (650) - l'utilisation, à différents endroits de la première et de la seconde zone géographique (250, 260), de différents ensembles de paramètres de connexion dépendant de l'emplacement afin que la couverture radio soit fournie à l'équipement utilisateur (20) lorsqu'il se trouve à ces endroits,
dans lequel l'équipement utilisateur (20) a la capacité de déterminer au moins une indication ou une approximation de l'emplacement actuel de l'équipement utilisateur (20), **caractérisé en ce que**, pour que l'équipement utilisateur (20) reçoive des services de communication, le système est configuré de telle sorte que :
- à un premier moment ou pendant un premier intervalle de temps, le réseau de communication mobile (100) transmet, et l'équipement utilisateur (20) reçoit, un élément d'information de couverture (651), l'élément d'information de couverture (651) étant ou correspondant à une partie des informations de couverture (650), dans lequel les informations de couverture (650) correspondent à une zone géographique assez vaste et l'élément d'information de couverture (651) correspond à une partie de la zone géographique des informations de couverture (650) concernant la zone géographique qui est actuellement - en fonction du mouvement présent et/ou passé de l'équipement utilisateur (20) - pertinente pour l'équipement utilisateur (20),
- à un second moment, le système ou le réseau de communication mobile (100) reçoit, à partir de l'équipement utilisateur (20), une demande de connexion et fournit une couverture radio, dans lequel la demande de connexion correspond à ou utilise l'ensemble de paramètres de connexion dépendant de l'emplacement que l'équipement utilisateur (20) est en mesure de déterminer sur la base de la détermination de son emplacement actuel et sur la base de l'élément d'information de couverture (651) ou de son contenu.

14. Programme comprenant un code de programme lisible par ordinateur qui, lorsqu'il est exécuté dans un système comprenant un réseau de communication mobile (100) et un équipement utilisateur (20), amène le système à exécuter un procédé selon l'une des revendications 1 à 11.

15. Support lisible par ordinateur comprenant des instructions qui, lorsqu'elles sont exécutées dans un système comprenant un réseau de communication mobile (100) et un équipement utilisateur (20), amènent le système à exécuter un procédé selon l'une des revendications 1 à 11.
